# FASCICULE DE BREVET EUROPEEN

(11) **EP 0 681 597 B1**
(45) Date de publication et mention de la délivrance du brevet: **10.07.2002**
(21) Numéro de dépôt: 94905149.4
(22) Date de dépôt: 24.01.1994
(51) Int. Cl.: C08L 95/00, C08K 5/00

(54) **EMULSION AQUEUSE POUR LA REALISATION D'ENROBES HYDROCARBONES, PROCEDE DE PREPARATION ET D'ENROBES OBTENUS**
WÄSSERIGE EMULSION FÜR KOHLENWASSERSTOFFÜBERZÜGE, HERSTELLENGSVERFAHREN UND ERHALTENE ÜBERZÜGE
OIL-IN-WATER EMULSION FOR PRODUCING COATED MATERIALS, PREPARATION METHOD THEREFOR AND RESULTING COATED MATERIALS

(30) Priorité: 29.01.1993 FR 9300979
(43) Date de publication de la demande: 15.11.1995
(73) Titulaire: COLAS, 92100 Boulogne-Billancourt (FR)
(72) Inventeur: JOLY, André 89 bis, avenue André-Rouy, F-94350 Villiers (FR); FRINAULT, Thierry, F-78220 Viroflay (FR)
(74) Mandataire: Bernasconi, Jean Raymond
(86) Numéro de dépôt international: FR9400084
(87) Numéro de publication internationale: WO9417139

(56) Documents cités:
- DE-B- 1 290 274
- FR-A- 2 369 322
- DATABASE WPI Derwent Publications Ltd., London, GB; AN 88-282105 & JP,A,63 206 503 (SHIN DORO) 25 Aoüt 1988
- DATABASE WPI Derwent Publications Ltd., London, GB; AN 75-69724W & JP,A,50 053 248 (NIPPON KOKAN) 12 Mai 1975

## Description

La présente invention est relative aux enrobés hydrocarbonés à l'émulsion dits aussi "enrobés à froid hydrocarbonés" car leur préparation s'effectue à température modérée, généralement inférieure ou égale à 80°C, par opposition aux enrobés "à chaud", dont la mise en oeuvre nécessite des températures beaucoup plus élevées, de l'ordre de 150°C.

De façon générale, les liants hydrocarbonés qui, avec les agrégats constituent les enrobés hydrocarbonés sont des liants à base de bitume ou de goudron, les bitumes pouvant être fluxés ou fluidifiés selon les normes T 65002 et T 65003.

Les enrobés à froid hydrocarbonés sont utilisables sous différentes formes, dont les dénominations normalisées sont les suivantes :
- graves-émulsion
- enrobés denses (dits aussi "bétons bitumineux")
- enrobés ouverts
- recyclage
- enrobés coulés à froid
- coulis bitumineux.

L'intérêt de ces enrobés réside dans le fait qu'ils ne nécessitent pas de chauffage des granulats, qu'ils s'accommodent de granulats humides, et qu'ils sont plus économiques et moins polluants que les enrobés à chaud.

Il est bien connu que les caractéristiques mécaniques d'un enrobé sont liées à la consistance du liant hydrocarboné qui lie les granulats et, dans certains cas, à la qualité du compactage.

Dans le cas des enrobés à l'émulsion, l'utilisation de liants durs tels que les bitumes 60/70, 40/50 et au-delà, utilisés dans les techniques à chaud et conduisant à des propriétés mécaniques élevées, n'est pas possible par suite de difficultés de compactage des enrobés et de la mauvaise coalescence des globules de liant. Ceci constitue une limitation au développement de ces enrobés.

FR 2 369 322 décrit des émulsions aqueuses à base de bitume comprenant, en pourcentage en poids :
- 5 à 30% de polyoléfines ;
- 5 à 40% d'une huile d'hydrocarbure contenant éventuellement une huile siccative (par exemple une huile de polybutène ou un résidu de distillation) ;
- 10 à 40% d'un bitume ;
- 15 à 78% d'eau ; et
- 2 à 15% d'un tensioactif.

Ces émulsions sont utilisables comme revêtements. Elles diffèrent des compositions de l'invention en ce qu'elles ne comprennent pas plus de 40% en poids de bitume.

L'invention a pour but de permettre l'utilisation, pour réaliser des enrobés à l'émulsion, de liants conduisant à la fois à une bonne maniabilité et à un compactage facile des enrobés, et, après mûrissement, à des performances mécaniques supérieures à celles obtenues avec des liants plus durs que ceux utilisés actuellement.

A cet effet, l'invention a pour premier objet une émulsion aqueuse pour la constitution d'enrobés hydrocarbonés contenant un liant hydrocarboné comprenant au moins 80% d'une matrice hydrocarbonée choisie parmi les bitumes de distillation directe, de désasphaltage ou oxydés, à l'état pur, fluidifiés ou fluxés, ledit liant comprenant au moins une huile siccative ou demi-siccative, naturelle ou synthétique, ou au moins une standolie d'une telle huile.

Comme il est connu, les standolies sont des prépolymères des huiles, obtenus par cuisson.

En effet, de manière inattendue, il a été constaté que des liants hydrocarbonés, ramollis par des huiles siccatives ou demi-siccatives (dont le pouvoir de durcissement en film mince est connu) permettent de fabriquer des enrobés d'épaisseur importante de résistance mécanique croissant dans le temps jusqu'à une certaine limite, à laquelle la résistance mécanique se stabilise sans atteindre des valeurs correspondant à une fragilité des enrobés.

Les définitions des bitumes fluidifés et fluxés selon l'invention sont conformes aux normes T 65002 et T 65003.

D'une façon générale les bitumes fluxés sont des bitumes dont la viscosité a été réduite par addition d'un solvant organique relativement peu volatile tel qu'une huile provenant de la houille ou du pétrole, nettement plus légère qu'une huile siccative ou demi-siccative.

De même les bitumes fluidifiés sont des bitumes dont la viscosité a été réduite par addition d'un solvant relativement volatile dérivé du pétrole tel que le kérosène.

Suivant d'autres caractéristiques :
- l'huile siccative est choisie parmi l'huile de lin, l'huile de bois de Chine, l'huile de Carthame, l'huile de Chènevis, l'huile Oïticica, l'huile de Caméline, l'huile d'abrasin, l'huile de coton, l'huile de sésame;
- l'émulsion contient en outre au moins un agent d'accélération;
- l'agent d'accélération est un composé organométallique comportant un cation métallique susceptible de changer de valence, préférentiellement le manganèse, fixé sur un ou des radicaux d'acides organiques, préférentiellement de type octoate ou naphténate; d'autres exemples de cations métalliques sont Co, Pb, Fe, Zn, Zr, Ca;
- le liant de l'émulsion contient de 1 à 20% d'huile(s) siccative(s), demi-siccative(s) ou de standolie(s) de ces mêmes huiles, et une proportion d'agent d'accélération telle que la quantité de métal soit de 0 à 0,5%.

L'invention a également pour objet divers procédés de préparation d'une émulsion telle que définie ci-dessus.

Suivant un premier mode de mise en oeuvre, on réalise séparément une émulsion de liant hydrocarboné et une émulsion de l'huile ou de la standolie, puis on mélange les deux émulsions.

Suivant un deuxième mode de mise en oeuvre, on réalise une émulsion de l'huile ou de la standolie, et on utilise cette émulsion pour préparer l'émulsion du liant hydrocarboné.

Suivant un troisième mode de mise en oeuvre, on mélange l'huile ou la standolie avec le liant hydrocarboné, puis on met ce mélange en émulsion.

L'agent d'accélération peut être introduit dans l'émulsion par prémélange avec l'huile, ou avec le liant hydrocarboné, ou à tout autre stade de la fabrication de l'émulsion.

L'émulsion fabriquée selon l'un des procédés décrits ci-dessus peut être utilisée de la même façon et avec les mêmes matériels que ceux classiquement utilisés dans les procédés d'enrobage à froid connus.

L'invention a encore pour objets d'une part un procédé de préparation d'un enrobé hydrocarboné, dans lequel on incorpore aux agrégats une émulsion telle que définie plus haut, et d'autre part des enrobés hydrocarbonés à froid préparés par ce procédé, ces enrobés pouvant être de l'un des types suivants :
- grave-émulsion, stockable ou d'utilisation immédiate
- enrobé dense à froid, stockable ou d'utilisation immédiate
- enrobé ouvert à froid, stockable ou d'utilisation immédiate
- recyclage d'enrobés
- retraitement de chaussées
- enrobé coulé à froid
- coulis bitumineux.

Selon un mode particulier de réalisation de l'invention l'émulsion de l'invention peut être utilisée pour la préparation d'enrobés hydrocarbonés destinés à la réalisation de chaussées.

On fournira ci-dessous des exemples de mise en oeuvre de l'invention.

### Exemple 1

| | Liant conforme à l'invention | | | | |
|---|---|---|---|---|---|
| | A | B | C | D | E |
| Bitume 40/50 | 92,7 | 92,4 | 92 | | |
| Bitume 60/70 | | | | 94,6 | |
| Bitume modifié par ajout de polymère | | | | | 92,4 |
| Styrène-butadiène- | | | | | |
| styrène (SBS) | | | | | |
| Huile de lin | 7 | 7 | 7 | 4,8 | 7 |
| Naphténate de manganèse à 6% de Mn | | | | | |
| (accélérateur) | 0,3 | 0,6 | 1 | 0,6 | 0,6 |

Ces cinq liants A à E présentent des viscosités voisines de celles d'un bitume pur de grade 180/220.

Des émulsions d'enrobage de type grave-émulsion ont été réalisées avec ces cinq liants, au moyen d'émulsifiants et de matériels classiquement utilisés pour ce genre d'émulsions.

Deux émulsions de référence R1 et R2 ont été réalisées avec des bitumes 80/100 et 180/220, qui sont les plus couramment utilisés en technique de grave-émulsion.

Des enrobages d'un mélange de gravillons et de sable de Garonne ont été effectués avec ces sept émulsions à raison de 100 parties d'agrégats, 3 parties d'eau et 6,7 parties d'émulsion à 60% de liant bitumineux (soit 4 parties de liant résiduel pour 100 parties d'agrégats).

Des éprouvettes de type Duriez, selon la norme NF P 98-251-4, ont été fabriquées. Les résistances à la compression à différents âges de mûrissement figurent dans le tableau suivant :

| Liant | Résistance à la compression (MPa) | | |
|---|---|---|---|
| | 14 jours | 28 jours | 45 jours |
| Liant R1 (bitume 180/220) | 3,5 | 3,8 | 4,0 |
| Liant R2 (bitume 80/100) | 4,7 | 5,2 | 5,6 |
| Liant A | 3,3 | 4,9 | 6,1 |
| Liant B | 3,8 | 6,2 | 7,5 |
| Liant C | 5,6 | 8,7 | 8,8 |
| Liant D | 4,2 | 6,0 | 7,5 |
| Liant E | 4,4 | 6,5 | 8,0 |

On fait ainsi les constatations suivantes.

Au début du mûrissement, les résistances des graves fabriquées avec les liants A à E suivant l'invention sont voisines de celles de graves fabriquées avec des bitumes 180/220 ou 80/100 et varient quelque peu selon la teneur en huile et en agent d'accélération de ces liants.

Au cours du mûrissement, les résistances augmentent beaucoup plus vite pour ces liants siccativés suivant l'invention que pour les bitumes purs.

Après 45 jours de mûrissement, les résistances des graves fabriquées avec les liants A à E sont nettement supérieures à celles des graves fabriquées avec des bitumes 180/220 et 80/100 purs, tout en conservant des valeurs acceptables, c'est-à-dire sans conduire à une fragilité des enrobés.

### Exemple 2

Un béton bitumineux à froid pour couches de roulement, conforme aux prescriptions du projet de norme AFNOR PR P 98-139, a été fabriqué en utilisant les émulsions des liants suivants :
- bitume 80/100
- liant B de l'exemple 1
- liant E de l'exemple 1

Après 45 jours de mûrissement, les résistances à la compression sur éprouvettes Duriez sont respectivement de 6,5 MPa pour le bitume 80/100,8,6 MPa pour le liant B, et 9,2 MPa pour le liant E.

Comme dans l'exemple précédent, on note une augmentation substantielle des performances des enrobés fabriqués selon l'invention.

### Exemple 3

Des émulsions de liants fabriqués selon l'invention peuvent être également utilisées dans le traitement et le recyclage des enrobés de chaussées.

Un liant suivant l'invention, de la composition suivante, a été fabriqué :
- liant spécial de régénération de pénétrabilité 200 83,8
- huile de lin 15
- naphténate de Mn à 6% de Mn 1,2

Comme il est connu, un liant spécial de régénération est un bitume appauvri en asphaltènes et enrichi en huiles, notamment aromatiques.

Une émulsion contenant 60% en poids de ce liant a été fabriquée et essayée comparativement à une émulsion courante de liant de régénération de pénétrabilité 400 (liant témoin).

Le pourcentage d'émulsion a été dans les deux cas de 2% par rapport au poids de l'enrobé fraisé.

Après mûrissement, les résistances à la compression sur éprouvettes Duriez figurent dans le tableau ci-après :

| Mûrissement | Liant témoin | Liant suivant l'invention |
|---|---|---|
| 14 jours | 5,1 MPa | 4,7 MPa |
| 60 jours | 5,6 MPa | 7,1 Mpa |

De manière non limitative, l'invention peut s'appliquer à différents types d'enrobés à l'émulsion, par exemple :
- graves-émulsion d'assise, de renforcement ou de reprofilage
- retraitement et recyclage de chaussée
- enrobés denses à froid
- enrobés ouverts à froid
- enrobés coulés à froid
- coulis bitumineux.

La stockabilité des graves-émulsion, des enrobés denses ou ouverts à froid ainsi obtenus est ajustée par ajout d'agent fluxant et/ou d'huile siccative ou demi-siccative, en fonction de chaque cas particulier, de sorte qu'il est possible de réaliser aussi bien des produits d'utilisation immédiate que des produits stockables.

Il résulte des essais effectués que l'invention permet d'utiliser des liants plus maniables à la mise en oeuvre, permettant un meilleur compactage et donnant, après mûrissement, les performances mécaniques de liants plus durs et plus cohésifs que ceux normalement utilisables.

L'accroissement des performances mécaniques permet d'augmenter la valeur structurelle et le pouvoir de renforcement des enrobés, ou de diminuer l'épaisseur d'enrobé, ce qui apporte des économies de matière et d'énergie. La rigidification des enrobés se stabilise toutefois à des valeurs excluant tout risque de fragilité.

L'invention permet aussi de régénérer des enrobés vieillis, grâce au pouvoir élevé de diffusion du liant dans son état initial et à l'augmentation des caractéristiques mécaniques qui intervient ensuite.

## Revendications

1. Emulsion aqueuse pour la constitution d'enrobés hydrocarbonés, contenant un liant hydrocarboné comprenant au moins 80% d'une matrice hydrocarbonée choisie parmi les bitumes de distillation directe, de désasphaltage ou oxydés, à l'état pur, fluidifiés ou fluxés, et les liants de régénération, ledit liant comprenant au moins une huile siccative ou demi-siccative, naturelle ou synthétique, ou au moins une standolie d'une telle huile.

2. Emulsion suivant la revendication 1, **caractérisée en ce que** l'huile est choisie parmi l'huile de lin, l'huile de bois de Chine, l'huile de Carthame, l'huile de Chènevis, l'huile Oïticica, l'huile de Caméline, l'huile d'abrasin, l'huile de coton et l'huile de sésame.

3. Emulsion suivant l'une quelconque des revendications 1 à 2, **caractérisée en ce qu'**elle comprend en outre au moins un agent d'accélération.

4. Emulsion suivant la revendication 3, **caractérisée en ce que** l'agent d'accélération est un composé organométallique comportant un cation métallique susceptible de changer de valence, préférentiellement le manganèse, fixé sur un ou des radicaux d'acides organiques, préférentiellement de type octoate ou naphténate.

5. Emulsion suivant l'une quelconque des revendications 1 à 4, **caractérisée en ce que** le liant de l'émulsion contient de 1 à 20% d'huile(s) siccative(s), demi-siccative(s) ou de standolie(s) de ces mêmes huiles, et une proportion d'agent d'accélération telle que la quantité de métal soit de 0 à 0,5%.

6. Procédé de préparation d'une émulsion suivant l'une quelconque des revendications 1 à 5, **caractérisé en ce qu'**on réalise séparément une émulsion de liant hydrocarboné et une émulsion de l'huile ou de la standolie, puis on mélange les deux émulsions.

7. Procédé de préparation d'une émulsion suivant l'une quelconque des revendications 1 à 5, **caractérisé en ce qu'**on réalise une émulsion de l'huile ou de la standolie, et on utilise cette émulsion pour préparer l'émulsion du liant hydrocarboné.

8. Procédé de préparation d'une émulsion suivant l'une quelconque des revendications 1 à 5, **caractérisé en ce qu'**on mélange l'huile ou la standolie avec le liant hydrocarboné, puis on met ce mélange en émulsion.

9. Procédé de préparation d'un enrobé hydrocarboné, **caractérisé en ce qu'**on incorpore aux agrégats une émulsion suivant l'une quelconque des revendications 1 à 5.

10. Enrobés hydrocarbonés à froid, préparés par le procédé de la revendication 9, de l'un des types suivants :
- grave-émulsion, stockable ou d'utilisation immédiate
- enrobé dense à froid, stockable ou d'utilisation immédiate
- enrobé ouvert à froid, stockable ou d'utilisation immédiate
- recyclage d'enrobés
- retraitement de chaussées
- enrobé coulé à froid
- coulis bitumineux.

## Patentansprüche

1. Wässrige Emulsion zur Bildung von Kohlenwasserstoffbelag, die ein Kohlenwasserstoffbindemittel enthält, das mindestens 80% einer Kohlenwasserstoffmatrix aufweist, die ausgewählt ist aus Destillationsbitumen, Entasphaltierungsbitumen oder oxidierten Bitumen, im reinen Zustand, verflüssigt oder gefluxt, und den Regenerationsbindemitteln, wobei dieses Bindemittel mindestens ein trocknendes oder halbtrocknendes, natürliches oder synthetisches Öl oder mindestens ein Standöl eines solchen Öls enthält.

2. Emulsion nach Anspruch 1, **dadurch gekennzeichnet, dass** das Öl ausgewählt ist aus Leinöl, Chinaöl, Safloröl, Hanföl, Oiticikaöl, Dotteröl, Holzöl, Baumwollsamenöl und Sesamöl.

3. Emulsion nach einem der Ansprüche 1 bis 2, **dadurch gekennzeichnet, dass** sie außerdem mindestens ein Beschleunigungsmittel enthält.

4. Emulsion nach Anspruch 3, **dadurch gekennzeichnet, dass** das Beschleunigungsmittel eine metallorganische Verbindung ist, die ein metallisches Kation besitzt, das die Wertigkeit ändern kann, und zwar vorzugsweise Mangan, das an einen Rest oder an Reste von organischen Säuren vorzugsweise vom Typ Octoat oder Naphtenat fixiert ist.

5. Emulsion nach einem der Ansprüche 1 bis 4, **dadurch gekennzeichnet, dass** das Bindemittel der Emulsion 1 bis 20% trocknende(s), halbtrocknende(s) Öl(e) oder Standöl(e) dieser Öle und einen solchen Anteil an Beschleunigungsmittel enthält, dass die Metallmenge 0 bis 0,5% beträgt.

6. Verfahren zur Herstellung einer Emulsion nach einem der Ansprüche 1 bis 5, **dadurch gekennzeichnet, dass** man getrennt eine Kohlenwasserstoffbindemittel-Emulsion und eine Emulsion des Öls oder des Standöls herstellt und dann die beiden Emulsionen mischt.

7. Verfahren zur Herstellung einer Emulsion nach einem der Ansprüche 1 bis 5, **dadurch gekennzeichnet, dass** man eine Emulsion des Öls oder des Standöls herstellt und diese Emulsion zur Herstellung der Emulsion des Kohlenwasserstoffbindemittels verwendet.

8. Verfahren zur Herstellung einer Emulsion nach einem der Ansprüche 1 bis 5, **dadurch gekennzeichnet, dass** man das Öl oder das Standöl mit dem Kohlenwasserstoffbindemittel mischt und dann diese Mischung in Emulsion bringt.

9. Verfahren zur Herstellung eines Kohlenwasserstoffbelags, **dadurch gekennzeichnet, dass** man in die Aggregate eine Emulsion nach einem der Ansprüche 1 bis 5 einarbeitet.

10. In dem Verfahren nach Anspruch 9 hergestelltes Kohlenwasserstoff-Kaltmischgut von einem der folgenden Typen:
- Kiessandemulsion, lagerfähig oder für sofortige Verwendung,
- schweres Kaltmischgut, lagerfähig oder für sofortige Verwendung,
- offenes Kaltmischgut, lagerfähig oder für sofortige Verwendung,
- Rezyklierung von Mischgut,
- Wiederaufbereitung von Straßen
- kalt verarbeitetes Mischgut
- bituminöser Schlamm.

## Claims

1. Oil-in-water emulsion for producing coated materials containing a hydrocarbon binder comprising at least 80% of a hydrocarbon matrix selected from straight-run, deasphalted or oxidized bitumens in a pure, fluidized or fluxed state, and regeneration binders, said binder containing at least one natural or synthetic drying or semi-drying oil, or at least one stand oil of such an oil.

2. Emulsion as claimed in claim 1, **characterised in that** the oil is selected from linseed oil, China wood oil, safflower oil, hempseed oil, oiticica oil, camomile oil, tung oil, cotton oil and sesame oil.

3. Emulsion as claimed in any one of claims 1 to 2, **characterised in that** it additionally contains an accelerator agent.

4. Emulsion as claimed in claim 3, **characterised in that** the accelerator agent is an organometallic compound containing a metal cation capable of changing valency, preferably manganese, fixed on an or the organic acid radical(s)s, by preference of the octoate or naphthenate type.

5. Emulsion as claimed in any one of claims 1 to 4, **characterised in that** the binder in the emulsion contains from 1 to 20% of drying or semi-drying oil(s) or stand oil(s) of said oils, and a proportion of accelerator agent such that the quantity of metal is from 0 to 0.5%.

6. Method of preparing an emulsion as claimed in any one of claims 1 to 5, **characterised in that** an emulsion of hydrocarbon binder is prepared and, separately, an emulsion of oil or stand oil, after which the two emulsions are mixed.

7. Method of preparing an emulsion as claimed in any one of claims 1 to 5, **characterised in that** an emulsion of the oil or stand oil is prepared and this emulsion is used to prepare the emulsion of hydrocarbon binder.

8. Method of preparing an emulsion as claimed in any one of claims 1 to 5, **characterised in that** the oil or stand oil is mixed with the hydrocarbon binder, after which this mixture is placed in emulsion.

9. Method of preparing a coated material containing a hydrocarbon binder, **characterised in that** an emulsion as claimed in any one of claims 1 to 5 is incorporated with the aggregates.

10. Cold-coated materials prepared by the method as claimed in claim 9, being one of the following types:
- gravel in emulsion which may be stored or used immediately,
- cold-coated dense material, which may be stored or used immediately,
- cold-coated open material, which may be stored or used immediately,
- recycled coated materials,
- road resurfacing
- cold-poured coated material
- bituminous slurry.
